# EUROPÄISCHE PATENTSCHRIFT

(11) **EP 3 324 088 B1**
(45) Veröffentlichungstag und Bekanntmachung des Hinweises auf die Patenterteilung: **19.02.2020**
(21) Anmeldenummer: 17202254.3
(22) Anmeldetag: 17.11.2017
(51) Int. Cl.: F16K 31/385, F16K 47/02, F16K 47/04, F16K 15/18, F16K 17/04, F16K 17/28

(54) **VENTIL, INSBESONDERE SERVOVENTIL**
VALVE, IN PARTICULAR SERVO VALVE
SOUPAPE, EN PARTICULIER SERVOSOUPAPE

(30) Priorität: 21.11.2016 DE 102016122372
(43) Veröffentlichungstag der Anmeldung: 23.05.2018
(73) Patentinhaber: A. u. K. Müller GmbH & Co. KG, 40595 Düsseldorf (DE)
(72) Erfinder:
(74) Vertreter: Feder Walter Ebert

(56) Entgegenhaltungen:
- WO-A1-93/05247
- WO-A1-2005/004684
- DE-B- 1 208 960
- DE-U1- 9 317 253
- FR-A1- 2 460 436
- US-A- 3 451 404
- US-A- 5 305 790

## Beschreibung

Die Erfindung betrifft ein Ventil, insbesondere ein Servoventil, gemäß dem Oberbegriff des Patentanspruchs 1. Einen weiteren Gegenstand der Erfindung bildet ein Verfahren zum Abbau von Druckspitzen in einem Ventileinlauf eines Ventils.

Die WO 93/05247 A1 betrifft ein Ventil mit einem zwischen einem Ventileinlauf und einem Ventilauslauf angeordneten Ventilsitz, wobei eine Membrane vorgesehen ist, die gegenüber dem Ventilsitz bewegbar ist. Zum Abbau von Druckspitzen ist zudem eine sich durch die Membrane erstreckende Druckentlastungsvorrichtung vorgesehen.

Eine ähnliche Vorrichtung ist auch in der FR 2 460 436 A1 beschrieben. Diese betrifft ein Ventil mit einer Druckentlastungsvorrichtung, die einen Entlastungskanal aufweist, der über ein als Kugel ausgestaltetes Dichtelement verschließbar ausgebildet ist.

Derartige Ventile werden in vielen Bereichen der Technik, beispielsweise in sanitären Einrichtungen wie Sanitärarmaturen oder ähnlichen Vorrichtungen zum Schalten von Fluidströmen wie beispielsweise Wasserströmen eingesetzt. Zum Schalten des Fluidstroms ist zwischen dem Ventileinlauf und dem Ventilauslauf ein Ventilsitz vorgesehen, der über ein zwischen einer Schließstellung und einer Offenstellung hin und her bewegbar angeordnetes Schließelement geöffnet oder geschlossen werden kann. Über die Stellung des Schließelements kann der das Ventil passierende Fluidstrom geregelt bzw. bei geschlossenem Ventil, wenn das Schließelement auf dem Ventilsitz aufliegt, auch vollständig unterbrochen werden.

Damit das Fluid durch das Ventil strömen kann, ist es erforderlich, dass über dem Ventil ein treibendes Druckgefälle anliegt. Der herrschende Druck am Ventileinlauf ist daher auch stets größer als der Druck am Ventilauslauf. Bei sanitären Einrichtungen wie beispielsweise Wasserhähnen liegt am Ventilauslass der Umgebungsdruck und am Ventileinlass ein entsprechend größerer Druck an, so dass bei einem Öffnen des Ventils das Fluid dem Druckgefälle folgend selbstständig vom Ventileinlass zum Ventilauslass strömt.

Zwar haben sich entsprechende Ventile in der Vergangenheit bewährt und werden auch vielfach eingesetzt, jedoch hat sich in der Praxis herausgestellt, dass Druckschwankungen innerhalb des Leitungssysteme und insbesondere Druckerhöhungen im Ventileinlauf zu Problemen führen können. Solche Druckerhöhungen treten häufig in Form von Druckspitzen mit vergleichsweise großen, über einen kurzen Zeitraum wirkenden Drücken auf. Zudem werden innerhalb des Leitungssystems häufig auch Rückflussverhinderer eingesetzt, die dazu führen, dass sich solche Druckspitzen nicht in Richtung des Leitungssystems abbauen können sondern diese Druckspitzen eingefangen werden und auf diese Weise auch über einen längeren Zeitraum anliegen. Weitere Druckerhöhungen können sich bei den im Leitungssystem verbauten Rückflussverhinderern durch thermische Effekte ergeben.

Aufgrund dieser Druckerhöhungen ergeben sich daher auch vergleichsweise große Kräfte auf die anliegenden Bauteile, die in ungünstigsten Situationen dazu führen können, dass diese beschädigt werden und es sogar einen Ausfall oder einer Funktionsstörung des Ventils kommen kann.

Davon ausgehend stellt sich die vorliegende Erfindung die **Aufgabe**, ein Ventil und ein Verfahren anzugeben, welche sich durch ein geringeres Ausfallrisiko auch bei größeren Druckschwankungen innerhalb des Leitungssystems auszeichnen.

Die genannte Aufgabe wird bei einem Ventil der eingangs genannten Art durch die Merkmale des Patentanspruchs 1 **gelöst**. Vorteilhafte Ausgestaltungen und Weiterbildungen sind Bestandteil der abhängigen Unteransprüche.

Durch eine Druckentlastungsvorrichtung können Druckerhöhungen im Ventileinlauf aufgrund von Druckschwankungen innerhalb des Leitungssystems auf einfache und zuverlässige Weise abgebaut werden, ohne dass die anliegenden Bauteile des Ventils hierdurch übermäßig belastet werden. Es ergibt sich eine geringe Gefahr von Beschädigungen dieser Bauteile und damit eine deutlich reduzierte Ausfallwahrscheinlichkeit des Ventils.

Die Druckentlastungsvorrichtung kann derart im Ventil angeordnet sein, dass sie auf einer Seite mit dem Druck des Ventilauslasses und an der anderen Seite mit dem Druck des Ventileinlasses beaufschlagt ist. Bei einer Druckerhöhung im Ventileinlass, also beispielsweise einem kurzzeitigen und starken Druckanstieg in Form einer Druckspitze, die über einem vorgegebenen Druck liegt, kann die Druckentlastungsvorrichtung den Druck selbstständig abbauen, wodurch dieser wieder innerhalb eines vorgegebenen Bereiches liegt und das Ventil nicht beschädigt wird.

In konstruktiver Ausgestaltung der Druckentlastungsvorrichtung hat es sich als vorteilhaft herausgestellt, wenn diese als Überdruckventil ausgestaltet ist. Eine derartige Ausgestaltung ermöglicht einen einfachen und zuverlässigen Abbau von Druckerhöhungen. Die Druckentlastungsvorrichtung bzw. das Überdruckventil kann derart ausgestaltet sein, dass es sich ab einem bestimmten Überdruck selbsttätig öffnet. Alternativ ist es jedoch auch möglich, dass im Ventileinlass ein Drucksensor vorgesehen ist oder dass ein Differenzdrucksensor vorgesehen ist, der die Druckdifferenz zwischen Ventileinlass und Ventilauslass misst, und bei einem vorgegebenen Differenzdruckwert ein Signal zum Abbau von Druckspitzen an die Druckentlastungsvorrichtung sendet.

Erfindungsgemäß weist die Druckentlastungsvorrichtung zum Druckabbau einen Entlastungskanal auf. Ein solcher Entlastungskanal kann im Fall einer Druckspitze dazu führen, dass Fluid in Richtung des über dem Ventil anliegenden Druckgefälles durch den Entlastungskanal in Richtung des niedrigeren Druckniveaus strömt.

Im Hinblick auf den Entlastungskanal ist vorgesehen, dass dieser verschließbar ausgebildet ist. In der geschlossenen Stellung kann kein Druckausgleich stattfinden. Denn in dieser Stellung kann kein Fluid durch den Entlastungskanal bzw. durch die Druckentlastungsvorrichtung strömen. Wenn der anliegende Differenzdruck einen vorgegebenen Wert übersteigt, kann sich der Entlastungskanal selbsttätig öffnen. Der Entlastungskanal kann sich insbesondere nur solange öffnen, bis die Druckdifferenz einen vorbestimmten Wert wieder unterschritten hat. In der Praxis ist dies meist schon nach einer sehr kurzen Zeitspanne wieder der Fall, so dass sich der Entlastungskanal nur für eine kurze Zeit öffnet und damit auch nur geringe Fluidmengen durch diesen strömen müssen, um eine Druckspitze abzubauen.

Wenn sich das Ventil in einer offenen Stellung befindet und das Schließelement vom Ventilsitz abgehoben ist, kann Fluid vom Ventileinlauf zum Ventilauslauf strömen. In dieser geöffneten Stellung sind Druckerhöhungen bzw. Druckspitzen in der Regel nicht zu befürchten, da das Fluid dann ungehindert durch das Ventil strömen kann und es nicht bzw. nur in geringem Maße am Ventileinlauf vor dem Schließelement gestaut wird. In der geöffneten Stellung des Ventils ist der Entlastungskanal daher geschlossen und etwaige Druckdifferenzen werden direkt über den Strömungsweg zwischen Ventileinlass und Ventilauslass abgebaut.

Erfindungsgemäß ist im Hinblick auf eine zuverlässige Absperrfunktion des Ventils weiterhin vorgesehen, dass die Druckentlastungsvorrichtung zum Verschließen des Entlastungskanals ein Dichtelement aufweist. Über das Dichtelement kann der Entlastungskanal fluiddicht abgeschlossen sein, so dass ein ungewolltes Austreten von Fluid verhindert werden kann. Dies ist insbesondere in der geschlossenen Ventilstellung von hoher Wichtigkeit, da es sonst zu Leckageströmen oder einem ungewollten Tropfen kommen könnte. Erst wenn ein bestimmter Überdruck zwischen dem Ventileinlauf und dem Ventilauslauf auftritt, kann sich der Entlastungskanal öffnen und das Dichtelement derart bewegt werden, dass der Entlastungskanal freigegeben wird.

Es hat sich in konstruktiver Hinsicht als vorteilhaft herausgestellt, wenn im Entlastungskanal ein Druckelement angeordnet ist. Das Druckelement kann sich durch den Entlastungskanal erstrecken, diesen jedoch nicht komplett ausfüllen. Zwischen den Rändern des Entlastungskanals und dem darin angeordneten Druckelement kann ein Spalt vorgesehen sein, durch welchen das Fluid im Falle eines Druckabbaus strömen kann. Das Druckelement kann bolzenförmig ausgestaltet sein und der Entlastungskanal kann beispielsweise als zylinderförmige Bohrung ausgestaltet sein.

Ferner hat es sich in konstruktiver Hinsicht als vorteilhaft herausgestellt, wenn das Dichtelement am Druckelement angeordnet ist. Über eine Bewegung des Druckelements kann dementsprechend das Dichtelement bewegt werden. Durch Bewegung des Druckelements kann das Dichtelement von einem Dichtsitz abgehoben werden, wodurch der Entlastungskanal freigegeben wird und ein im Ventileinlauf vorherrschender Überdruck abgebaut wird. Das Druckelement kann auf der einen Seite mit dem höheren Druckniveau des Ventileinlaufs und auf der anderen Seite mit dem Druckniveau des Ventilauslaufs verbunden sein, so dass sich dieses in Abhängigkeit der Druckdifferenz bewegen kann.

Es hat sich weiterhin als vorteilhaft herausgestellt, wenn die Druckentlastungsvorrichtung in Richtung deren geschlossener Stellung durch ein Federelement vorgespannt ist. Bei einer Druckerhöhung wie etwa eine ruckartig auftretenden Druckspitze kann sich das Druckelement entgegen der Kraft der Feder bewegen. Bei einer derartigen Bewegung kann dann das Dichtelement vom Dichtsitz abheben und den Entlastungskanal freigeben. Der Wert der Federkonstante des Federelements ist dabei maßgeblich für das Auslösen der Druckentlastungsvorrichtung. Denn nur wenn die Druckdifferenz zwischen Ventileinlauf und Ventilauslauf groß genug ist, um das Druckelement entgegen der Kraft der Feder zu bewegen wird, kommt es zu einem Druckausgleich bzw. zu einem Druckabbau. Wenn die Druckdifferenz nach einer Fluidströmung durch den Entlastungskanal wieder abgefallen ist, sorgt die sich entspannende Feder dafür, dass der Entlastungskanal wieder verschlossen wird. Das Dichtelement kann auch direkt mit dem Federelement verbunden sein. In dieser Ausgestaltung wird kein Druckelement benötigt.

Erfindungsgemäß ist ferner vorgesehen, dass das Schließelement eine Membrane und ein Stützelement zum Stützen der Membrane aufweist. Die Membrane kann aus einem gummiartigen Material oder aus Kunststoff bestehen und mit dem Ventilsitz derart zusammenwirken, dass diese bei geschlossenem Ventil auf dem Ventilsitz aufliegt. Durch eine verformbare Membrane kann der Ventilsitz zu einem gewissen Grad in die Membrane eintauchen, was die Dichtigkeit des Ventils erhöhen kann. Das Stützelement kann einen Dichtsitz aufweisen, welcher mit dem Dichtelement derart zusammenwirken kann, dass der Entlastungskanal geschlossen, insbesondere fluiddicht verschlossen werden kann. Weiterhin kann das Stützelement eine Auflage beispielsweise in Form einer Schulter aufweisen, auf welcher sich das Federelement abstützen kann. Beim Abbau von Überdruckspitzen kann sich dann das Druckelement der Druckentlastungsvorrichtung entgegen der Feder in Ablaufrichtung und damit relativ zu dem Stützelement bewegen. Das Dichtelement, welches mit dem Druckelement der Druckentlastungsvorrichtung gekoppelt ist, kann dann vom Dichtsitz des Stützelements abheben und den Entlastungskanal freigeben. Im Hinblick auf die konstruktive Ausgestaltung des Stützelements hat es sich als vorteilhaft erwiesen, wenn sich dieses in den Ventilauslauf erstreckt. Das Stützelement kann die Membrane zumindest abschnittsweise, insbesondere an deren Rändern umschließen, wodurch sich eine bessere Stützwirkung der sonst leicht verformbaren Membrane ergibt.

Ferner hat es sich als vorteilhaft erwiesen, wenn sich die Druckentlastungsvorrichtung durch das Stützelement erstreckt. Die Druckentlastungsvorrichtung kann mittig im Stützelement angeordnet sein. Bei einer Entlastung, also bei einem Abbau von einer Druckspitze, kann sich das Druckelement der Druckentlastungsvorrichtung relativ zum Schließelement bewegen. Beim Öffnen und Schließen des Ventils kann sich das Druckelement zusammen mit dem Stützelement bewegen. Weiterhin kann die Druckentlastungsvorrichtung auch konzentrisch zur Membrane angeordnet sein.

Im Hinblick auf die Ausgestaltung der Membrane hat es sich als vorteilhaft herausgestellt, wenn diese einen Einspannbereich zum Verbinden mit oder zum Einspannen in eine Wand des Ventils, einen Schließbereich zum Schließen des Ventils und einen Rollbereich zum Bewegen des Schließbereichs gegenüber dem feststehenden Einspannbereich und damit gegenüber dem Ventilsitz aufweist. Der Einspannbereich kann derart mit einer Wand des Ventils verbunden sein, so dass sich dieser Bereich nicht bewegen kann. Der Schließbereich der Membrane kann derart mit dem Ventilsitz zusammenwirken, dass der Schließbereich in geschlossener Stellung des Ventils auf dem Ventilsitz aufliegt und in geöffneter Stellung des Ventils vom Ventilsitz abgehoben ist. Der Rollbereich kann zwischen dem Einspannbereich und dem Schließbereich angeordnet sein und dafür sorgen, dass sich der Schließbereich relativ zum Einspannbereich bewegen kann. Beim Öffnen und Schließen des Ventils kann der Rollbereich beispielsweise derart abrollen, dass der Schließbereich gegenüber dem Ventilsitz bewegt werden kann. Die Druckentlastungsvorrichtung kann derart angeordnet sein, dass sich der Entlastungskanal vom Druckraum zum Ventilauslass erstreckt.

Erfindungsgemäß weist der Ventileinlauf einen in Zulaufrichtung vor der Membrane angeordneten Ventileinlaufbereich und einen in Ablaufrichtung hinter der Membrane angeordneten Druckraum auf. Der Druckraum und der Einlaufbereich können auf dem gleichen Druckniveau liegen, so dass sich entsprechende Druckspitzen aus dem Einlaufbereich auch bis in den Druckbereich ausbreiten können. Durch die Anordnung des Druckbereichs in Abflussrichtung hinter der Membrane wird erreicht, dass das Schließelement bzw. die Membrane durch den im Druckraum herrschenden Überdruck gegenüber dem Ventilauslauf auf den Ventilsitz gedrückt wird. Derartige Ventile werden auch eigenmediumbetätigbare Ventile genannt. Diese Ausgestaltung ermöglicht, dass das Ventil nicht durch eine externe Kraft in der geschlossenen Stellung gehalten werden muss, sondern dass das Ventil vielmehr durch den anliegenden Überdruck in der geschlossenen Stellung verbleibt. Der Ventileinlauf kann mit dem Druckraum über eine Verbindungsleitung verbunden sein. Die Verbindungsleitung kann durch das Schließelement geführt sein. Die Membrane kann dafür im Schließbereich, jedoch abseits des Ventilsitzes eine Öffnung aufweisen. Weiterhin ist es jedoch auch möglich, dass der Ventileinlaufbereich und der Druckraum miteinander über eine externe Leitung verbunden sind, die sich beispielsweise nicht durch die Membrane oder das Schließelement erstreckt.

Es ist vorgesehen, dass der Druckraum mit einem Vorsteuerventil verbunden ist. Über ein Vorsteuerventil kann das Ventil gesteuert werden. Es ist nicht erforderlich, das Schließelement des Ventils aktiv zu steuern, sondern lediglich das Vorsteuerventil, was aufgrund der geringen Größe des Vorsteuerventils zu einem verringerten Energie- und Kraftaufwand führt.

Es ist vorgesehen dass, das Vorsteuerventil mit dem Ventilauslauf verbunden ist. Ein Öffnen des Vorsteuerventils kann dazu führen, dass das Fluid aus dem Druckraum durch das Vorsteuerventil in den Ventilauslauf eintreten kann. Durch diese Strömung kann der Druck im Druckraum sinken. Der Druck des nachströmendes Fluid kann dann dazu führen, dass die Membrane selbstständig vom Ventilsitz abhebt. Zum Öffnen des Ventils genügt es daher, wenn das Vorsteuerventil geöffnet wird. Wenn das Vorsteuerventil wieder geschlossen wird, kann aus dem Druckraum kein Fluid mehr in den Ventilauslass eintreten, was zu einem Druckanstieg im Druckraum führt. Durch diesen Druckanstieg wird das Schließelement wieder in Richtung der geschlossenen Stellung bewegt bis die Membrane auf dem Ventilsitz aufliegt und so eine weitere Fluidströmung vom Ventileinlass zum Ventilauslass unterbunden wird. Das Vorsteuerventil kann über eine Auslaufleitung mit dem Abfluss verbunden sein. Die Abflussleitung kann durch das Schließelement geführt sein. In vorteilhafter Weise ist die Abflussleitung jedoch um das Schließelement herum und durch den Ventileinlauf bis in den Ventilablauf geführt.

Das Vorsteuerventil kann manuell, jedoch in vorteilhafter Weise auch elektrisch und/oder magnetisch betätigbar sein. Vorteilhaft ist es ferner, wenn das Vorsteuerventil derart mit dem Ventilauslauf verbunden ist, dass sich eine Strömungsverbindung zwischen dem Vorsteuerventil und dem Ventilauslauf durch das Schließelement erstreckt.

Das Vorsteuerventil kann einen Vorsteuerventilsitz und ein gegenüber dem Ventilsitz angeordnetes Vorsteuerschließelement aufweisen, die jedoch im Verhältnis zu dem Ventil deutlich kleiner sein können. Eine Druckspitze kann daher nicht nur zur Beschädigung der Membrane und des Ventilsitzes des Ventils führen, sondern insbesondere auch zu einer Funktionsstörung oder Beeinträchtigung bis hin zu einer Zerstörung des Vorsteuerventils. Die Druckentlastungsvorrichtung kann daher derart ausgelegt sein, dass auch Beschädigungen des Vorsteuerventils verhindert werden.

Im Hinblick auf die eingangs genannte Aufgabe wird zur **Lösung** ferner ein Verfahren mit den Merkmalen des Patentanspruchs 10 vorgeschlagen. Es ergeben sich die bereits im Zusammenhang mit dem Ventil nach Patentanspruch 1 erläuterten Vorteile.

Auch im Hinblick auf das Verfahren hat es sich als vorteilhaft herausgestellt, wenn das Ventil zumindest ein oder mehrere der vorstehend genannten Merkmale des Ventils aufweist. Es ergeben sich die im Zusammenhang mit dem Ventil erläuterten Vorteile.

Weitere Einzelheiten und Vorteile eines erfindungsgemäßen Ventils sowie des zugehörigen Verfahrens werden nachfolgend unter Zuhilfenahme der beigefügten Figuren anhand dreier Ausführungsbeispiele näher erläutert. Darin zeigen:
- Fig. 1: in starker schematischer Ansicht einen Querschnitt durch ein Ventil gemäß einer nicht erfindungsgemäßen ersten Ausführung,
- Fig. 2: eine der Darstellung der Fig. 1 entsprechende Ansicht gemäß einer nicht erfindungsgemäßen zweiten Ausführung,
- Fig. 3: eine der Darstellung der Fig. 1 entsprechende Ansicht gemäß einer erfindungsgemäßen dritten Ausführung.

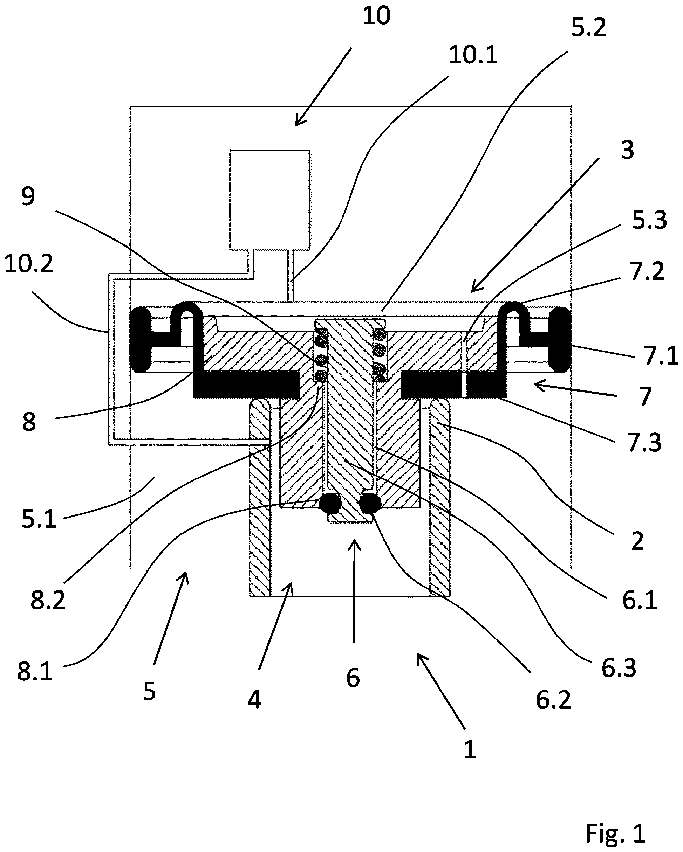

Die in den Darstellungen der Fig. 1, 2 und 3 dargestellten Ventile 1 können beispielsweise in Sanitärarmaturen eingesetzt werden und dazu dienen, Wasserströme zu regulieren.

Der zulaufende Wasserstrom fließt dabei von unten in das Ventil 1 durch den Ventileinlauf 5 ein und kann dann in geregelter Menge durch den Ventilauslauf 4 wieder austreten. Besonders in der geschlossenen Stellung des Ventils 1 herrschen dabei mitunter große Druckunterschiede zwischen dem Ventileinlauf 5 und dem Ventilauslauf 4. In der Praxis kann es nun in der geschlossenen Stellung des Ventils aufgrund von Druckschwankungen im Ventilzulauf 5 bzw. aufgrund von Fehlfunktionen vorgeschalteter Komponenten im Leitungssystem auch dazu kommen, dass der Druck im Ventileinlauf 5 kurzzeitig stark ansteigt und durch im Leitungssystem vorgesehene Rückflussverhinderer nicht mehr abgebaut werden kann. Solche Druckerhöhungen können sich insbesondere negativ auf das in den Figuren schematisch dargestellte Vorsteuerventil 10 auswirken. Denn dieses weist mitunter sehr kleine Bauteile auf, die aufgrund der von den Druckspitzen wirkenden Kräfte leicht beschädigt werden können.

Um eine Beschädigung des Ventils 1 sicher zu verhindern und somit das Ausfallrisiko zu verringern, weist dieses eine Druckentlastungsvorrichtung 6 auf, über welche Druckspitzen abgebaut werden können, so wie dies nachfolgend noch genauer erläutert wird.

In der Darstellung der Fig. 1, 2 und 3 ist das Ventil 1 in einer geschlossenen Stellung dargestellt. In dieser Stellung kann vom Ventileinlauf 5 kein Wasser zum Ventilauslauf 4 strömen. Um den Wasserstrom zu unterbinden, weist das Ventil 1 einen kreisförmigen Ventilsitz 2 und einen gegenüber dem Ventilsitz 2 in horizontaler Richtung bewegbares Schließelement 3 auf. Gemäß der Darstellungen in den Fig. 1, 2 und 3 weist das Schließelement 3 im unteren Bereich eine Membrane 7 auf, welche in den Figuren als dickes schwarzes Element dargestellt ist. In der gezeigten Stellung liegt ein Schließbereich 7.3 der Membrane 7 auf dem Ventilsitz 2 auf und dichtet so den Ventileinlauf 5 gegenüber dem Ventilauslauf 4 ab. Damit die Membrane 7 das Ventil möglichst sicher verschließen kann, ist diese aus einem flexiblen Material gefertigt, weshalb die Membrane 7 abgestützt werden muss. Zur Erhöhung der Stabilität weist das Schließelement 3 daher ein Stützelement 8 auf, welches die Membrane 7 stützt und zur Verbesserung der Stabilität diese in einem Randbereich umschließt.

Um das Schließelement 3 auch ohne zusätzliche Energie aufwenden zu müssen, in der dargestellten Stellung zu halten, ist oberhalb des Schließelements 3 ein Druckraum 5.2 angeordnet, der mit dem unterhalb des Schließelements 3 liegenden Ventileinlaufbereich 5.1 auf einem Druckniveau liegt. Zur Verbindung der beiden Bereiche ist eine Verbindungsleitung 5.3 vorgesehen, die sich zwischen dem Ventileinlaufbereich 5.1 und dem Druckraum 5.2 erstreckt und durch das Schließelement 3 geführt ist. Durch das im Druckraum 5.2 befindliche Wasser wirkt auf das Schließelement 3 eine in den Zeichnungen nach unten wirkende Druckkraft, die das Schließelement 3 bzw. den Schließbereich 7.3 der Membrane 7 auf den Ventilsitz 2 drückt und das Ventil 1 somit verschließt.

Treten nun im Ventileinlauf 5 Druckspitzen auf, so erhöht sich der Druck sowohl im Ventileinlaufbereich 5.1 als auch im Druckraum 5.2, so dass es dazu kommt, dass die Membrane 7 auf den Ventilsitz 2 aufgepresst wird. Daneben wirkt eine solche Druckspitze auch auf das in den Darstellungen nur schematisch dargestellte Vorsteuerventil 10, was ebenfalls zu Beschädigungen oder Fehlfunktionen führen kann. Zum besseren Verständnis soll nun nachfolgend zunächst der Aufbau und die Funktion des Vorsteuerventils 10 kurz erläutert werden, bevor dann näher auf die Druckentlastungsvorrichtung 6 zum Abbau der Druckspitzen eingegangen wird.

Das in den Figuren schematisch dargestellte Vorsteuerventil 10 dient dazu, die benötigte Kraft zum Öffnen und Schließen des Ventils 1 zu verringern. Das Vorsteuerventil 10 ist über eine Druckleitung 10.1 mit dem Druckraum 5.2 und über eine Auslaufleitung 10.2 mit dem Ventilauslauf 4 verbunden. Die Auslaufleitung 10.2 ist außen um das Schließelement 3 herum und durch den Ventileinlaufbereich 5.1 geführt. Wenn das Vorsteuerventil 10 geöffnet wird, fließt aufgrund der herrschenden Druckdifferenz zwischen dem Druckraum 5.2 und dem Ventilauslass 4 Wasser vom Druckraum 5.2 über die Druckleitung 10.1 durch das Vorsteuerventil 10 und über die Auslaufleitung 10.2 in den Ventilauslauf 4. Dies hat zur Folge, dass der Druck im Druckraum 5.2 absinkt und sich dann aufgrund des nachströmenden Wassers das Schließelement 3 selbstständig vom Ventilsitz 2 abhebt und der direkte Strömungsweg vom Ventileinlauf 5 zum Ventilauslass 4 freigegeben wird. Damit sich das Schließelement 3 entsprechend nach oben bewegen kann, weist die Membrane 7 einen Rollbereich 7.2 auf, welcher eine entsprechende Bewegung des Schließbereiches 7.3 gegenüber einem feststehenden Einspannbereich 7.1 der Membrane 7 ermöglicht.

Sobald das Vorsteuerventil 10 wieder geschlossen wird, kann kein Wasser mehr aus dem Druckraum 5.2 über das Vorsteuerventil 10 ablaufen, so dass es zu einem Wasserstau und damit zu einem Druckanstieg im Druckraum 5.2 kommt. Aufgrund dieses Druckanstiegs wirkt auf das Schließelement 3 eine in den Zeichnungen nach unten gerichtete Kraft in Richtung des Ventilsitzes 2, wodurch sich das Schließelement 3 nach unten bewegt, bis die Membrane 7 auf dem Ventilsitz 2 aufliegt und das Ventil 1 wieder geschlossen ist.

Um nun auftretende Druckspitzen abzubauen, weist das Ventil 1 eine Druckentlastungsvorrichtung 6 auf. Diese erstreckt sich zwischen dem Druckraum 5.2 und dem Ventilauslauf 4. Wenn im Ventileinlauf 5 der Druck schlagartig ansteigt, steigt aufgrund der Verbindungsleitung 5.3 auch der Druck im Druckraum 5.2 und im Vorsteuerventil 10 an. Damit die entsprechende Druckspitze nun nicht auf das Vorsteuerventil 10 bzw. auf die Membrane 7 durchschlägt, kann die Druckentlastungsvorrichtung 6 den Druckraum 5.2 über einen Entlastungskanal 6.1 mit dem Ventilauslauf 4 verbinden, so dass geringe Mengen Wasser durch die Druckentlastungsvorrichtung 6 ausströmen können. Solange der Druck im Druckraum 5.2 oberhalb einer bestimmten Differenzdruckgrenze liegt, bleibt die Druckentlastungsvorrichtung 6 geöffnet. Sobald die Druckspitze entsprechend abgebaut wurde und der Druck im Druckraum 5.2 wieder auf ein tolerierbares Niveau abgefallen ist, wird der Entlastungskanal 6.1 wieder geschlossen.

Nachfolgend soll nun anhand der verschiedenen Ausgestaltungen die Funktion und der Aufbau der Druckentlastungsvorrichtung näher beschrieben werden.

Gemäß der Darstellung in Fig. 1, weist die dort dargestellte Druckentlastungsvorrichtung 6 zur Betätigung im Entlastungskanal 6.1 ein bolzenförmiges Druckelement 6.3 auf, welches sich aufgrund einer Druckspitze bewegen kann. Wenn die Druckdifferenz zu groß wird, wird das Druckelement 6.3 entgegen der Kraft eines als Druckfeder ausgestalteten Federelements 9 bewegt, was dann dazu führt, dass ein Dichtelement 6.2 von einem am Stützelement 8 angeordneten Dichtsitz 8.1 abhebt und den Entlastungskanal 6.1 freigibt. Aufgrund der Druckdifferenz strömt dann Wasser durch den Entlastungskanal 6.1 in Richtung des Ventilauslaufs 4 bis die Druckspitze abgebaut ist.

Das Federelement 9 ist mit dem Stützelement 8 verbunden und stützt sich auf einer Schulter 8.2 gegenüber dem Stützelement 8 ab. Bei einem Druckabbau kommt es daher zu einer Bewegung des Druckelements 6.3 im Schließelement 3 entgegen der Kraft des Federelements 9. Sobald die Druckspitze abgebaut ist und die Druckdifferenz wieder unterhalb der Differenzdruckgrenze liegt, bewegt sich das Druckelement 6.3 in Richtung der Kraft des sich entspannenden Federelements 9, so dass das Dichtelement 6.1 den Entlastungskanal 6.1 wieder verschließt.

In der Ausgestaltung gemäß Fig. 1 ist das Dichtelement 6.2 als O-Ring ausgestaltet. Bei einer Bewegung des Druckelements 6.3 bzw. des Dichtelements 6.2 nach unten, wird der Entlastungskanal 6.1 zunächst noch nicht freigegeben, sondern das Druckelement 6.3 muss so weit nach unten bewegt werden, bis der O-Ring am unteren Ende aus dem Entlastungskanal 6.1 austritt.

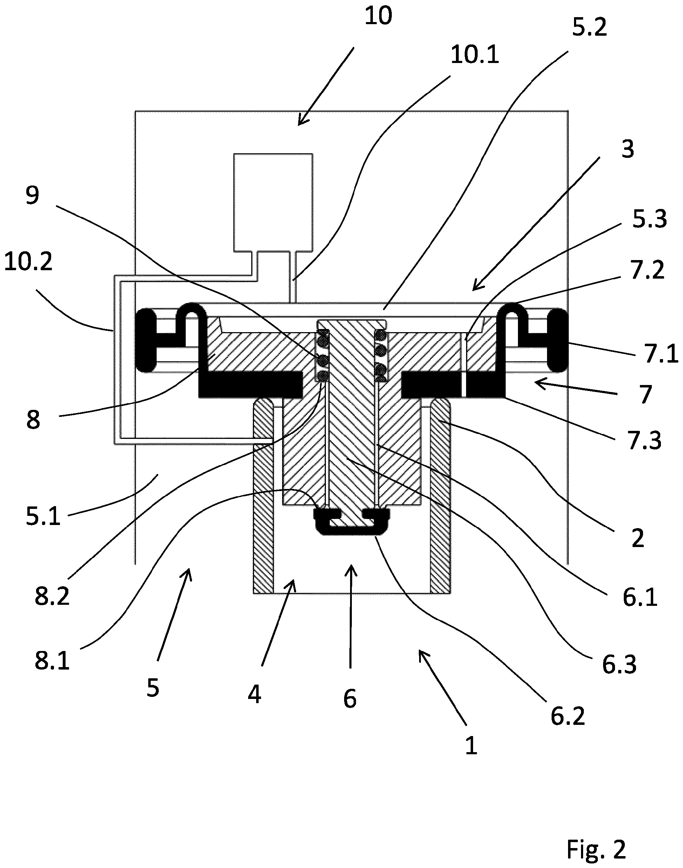

Die Ausgestaltung gemäß Fig. 2 unterscheidet sich nur insoweit von der Ausgestaltung der Fig. 1, als dass bei dieser das Dichtelement 6.2 nicht als O-Ring, sondern als Dichtteller ausgestaltet ist, welcher von unten gegen einen Dichtsitz 8.1 drückt. Bei einer Druckspitze bewegt sich der Dichtteller analog zur Ausgestaltung gemäß Fig. 1 nach unten, so dass der Entlastungskanal 6.1 freigegeben wird und die Druckspitze abgebaut werden kann.

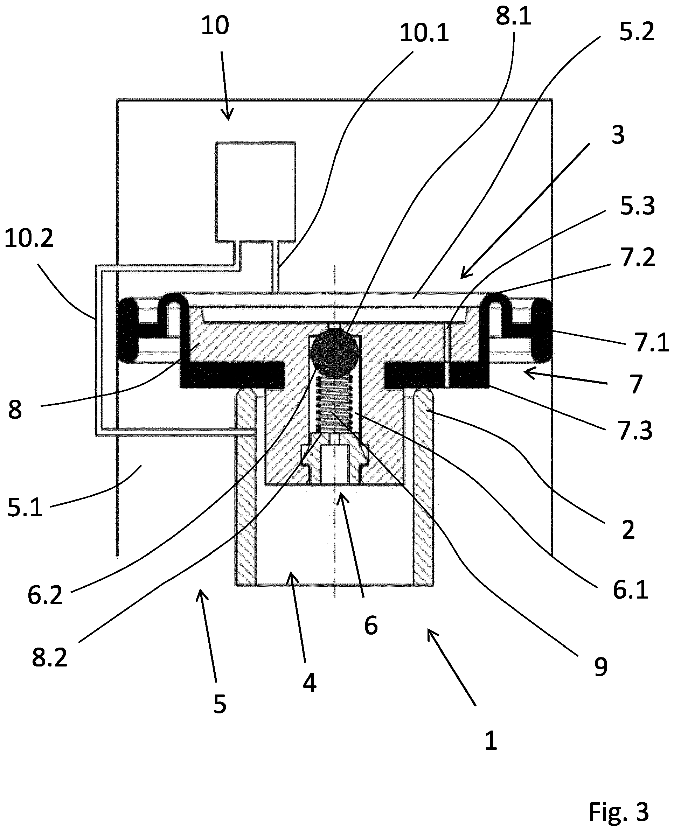

Bei der in der Fig. 3 dargestellten Ausgestaltung ist kein Druckelement 6.3 vorgesehen, sondern das als Gummikugel ausgestaltete Dichtelement 6.2 ist direkt mit dem als Druckfeder ausgestalteten Federelement 9 verbunden und wird von diesem gegen den Dichtsitz 8.1 gedrückt Die Auflage 8.2 befindet sich in dieser Ausgestaltung unterhalb des Dichtelements 6.2 stützt jedoch wie bei den Ausgestaltungen gem. Fig. 1 und 2 das Federelement 9 gegenüber dem Schließelement 3 ab. Bei einer Druckspitze wird das Dichtelement 6.2 entgegen der Kraft des Federelements 9 nach unten bewegt, so dass das Wasser an dem Dichtelement 6.2 vorbei durch den Entlastungskanal 6.1 in den Ventilauslauf 4 strömen kann. Wenn die Druckspitze abgebaut ist, wird das Dichtelement 6.2 aufgrund der Schließkraft des Federelements 9 wieder auf den Dichtsitz 8.1 gedrückt und der Entlastungskanal 6.1 verschlossen.

Die Druckentlastungsvorrichtung 6 ermöglicht somit einen zuverlässigen Abbau von Druckspitzen, wodurch sich das Ausfallrisiko des Ventils 1 verringert.

### Bezugszeichen:

- 1: Ventil
- 2: Ventilsitz
- 3: Schließelement
- 4: Ventilauslauf
- 5: Ventileinlauf
- 5.1: Ventileinlaufbereich
- 5.2: Druckraum
- 5.3: Verbindungsleitung
- 6: Druckentlastungsvorrichtung
- 6.1: Entlastungskanal
- 6.2: Dichtelement
- 6.3: Druckelement
- 7: Membrane
- 7.1: Einspannbereich
- 7.2: Rollbereich
- 7.3: Schließbereich
- 8: Stützelement
- 8.1: Dichtsitz
- 8.2: Auflage
- 9: Federelement
- 10: Vorsteuerventil
- 10.1: Druckleitung
- 10.2: Auslaufleitung

## Patentansprüche

1. Ventil, insbesondere Servoventil, mit einem zwischen einem Ventileinlauf (5) und einem Ventilauslauf (4) angeordneten Ventilsitz (2) und einem gegenüber dem Ventilsitz (2) bewegbar angeordneten Schließelement (3), das eine Membrane (7), ein Stützelement (8) zum Stützen der Membrane (7) und eine Druckentlastungsvorrichtung (6) zum Abbau von Druckspitzen im Ventileinlauf (5) aufweist, wobei die Druckentlastungsvorrichtung (6) einen Entlastungskanal (6.1) aufweist, der über ein als Kugel ausgestaltetes Dichtelement (6.2) verschließbar ausgebildet ist, wobei die Kugel mit einem als Druckfeder ausgestaltetem Federelement (9) verbunden ist und von diesem gegen einen Dichtsitz (8.1) gedrückt wird, wobei der Ventileinlauf (5) einen in Zulaufrichtung vor der Membrane (7) angeordneten Ventileinlaufbereich (5.1) und einen in Abflussrichtung hinter der Membrane (7) angeordneten Druckraum (5.2) aufweist, wobei der Druckraum (5.2) mit einem Vorsteuerventil (10) und das Vorsteuerventil (10) mit dem Ventilauslauf (4) verbunden ist,
**dadurch gekennzeichnet,**
**dass** die Kugel als Gummikugel ausgestaltet ist und dass das Vorsteuerventil (10) über eine Druckleitung (10.1) mit dem Druckraum (5.2) und über eine Auslaufleitung (10.2) mit dem Ventilauslauf (4) verbunden ist, wobei die Auslaufleitung (10.2) außen um das Schließelement (3) herum und durch den Ventileinlaufbereich (5.1) geführt ist.

2. Ventil nach Anspruch 1, **dadurch gekennzeichnet, dass** die Druckentlastungsvorrichtung (6) als Überdruckventil ausgestaltet ist.

3. Ventil nach einem der vorhergehenden Ansprüche, **dadurch gekennzeichnet, dass** in dem Entlastungskanal (6.1) ein Druckelement (6.3) angeordnet ist.

4. Ventil nach Anspruch 3, **dadurch gekennzeichnet, dass** das Dichtelement (6.2) an dem Druckelement (6.3) angeordnet ist.

5. Ventil nach einem der vorhergehenden Ansprüche, **dadurch gekennzeichnet, dass** die Druckentlastungsvorrichtung (6) in Richtung deren geschlossener Stellung durch ein Federelement (9) vorgespannt ist.

6. Ventil nach einem der vorhergehenden Ansprüche, **dadurch gekennzeichnet, dass** sich die Druckentlastungsvorrichtung (6) durch das Stützelement (8) erstreckt.

7. Ventil nach einem der vorhergehenden Ansprüche, **dadurch gekennzeichnet, dass** die Druckentlastungsvorrichtung (6) konzentrisch zur Membrane (7) angeordnet ist.

8. Ventil nach einem der vorhergehenden Ansprüche, **dadurch gekennzeichnet, dass** die Membrane (7) einen Einspannbereich (7.1) zum Verbinden mit oder zum Einspannen in eine Wand des Ventils (1), einen Schließbereich (7.3) zum Schließen des Ventils (1), und einen Rollbereich (7.2) zum Bewegen des Schließbereichs (7.3) gegenüber dem Ventilsitz (2) aufweist.

9. Ventil nach einem der vorhergehenden Ansprüche, **dadurch gekennzeichnet, dass** das Vorsteuerventil (10) derart angeordnet ist, dass der Druck im Druckraum (5.2) beim Öffnen des Vorsteuerventils (10) sinkt und dass das Schließelement (3) selbstständig vom Ventilsitz (2) abhebt.

10. Verfahren zum Abbau von Druckspitzen in einem Ventileinlauf (5) eines Ventils (1), insbesondere eines Servoventils, mit einem zwischen dem Ventileinlauf (5) und einem Ventilauslauf (4) angeordneten Ventilsitz (2) und einem gegenüber dem Ventilsitz (2) bewegbar angeordneten Schließelement (3), das eine Membrane (7), ein Stützelement (8) zum Stützen der Membrane (7) und eine Druckentlastungsvorrichtung aufweist, wobei sich die Druckentlastungsvorrichtung (6) bei einer Druckspitze im Ventileinlauf (5) selbstständig öffnet, wobei die Druckentlastungsvorrichtung (6) einen Entlastungskanal (6.1) aufweist, der über ein als Kugel ausgestaltetes Dichtelement (6.2) verschließbar ausgebildet ist, wobei die Kugel mit einem als Druckfeder ausgestalteten Federelement (9) verbunden ist und von diesem gegen einen Dichtsitz (8.1) gedrückt wird, wobei der Ventileinlauf (5) einen in Zulaufrichtung vor der Membrane (7) angeordneten Ventileinlaufbereich (5.1) und einen in Abflussrichtung hinter der Membrane (7) angeordneten Druckraum (5.2) aufweist, wobei der Druckraum (5.2) mit einem Vorsteuerventil (10) und das Vorsteuerventil (10) mit dem Ventilauslauf (4) verbunden ist,
**dadurch gekennzeichnet,**
**dass** als Kugel eine Gummikugel verwendet wird und dass das Vorsteuerventil (10) über eine Druckleitung (10.1) mit dem Druckraum (5.2) und über eine Auslaufleitung (10.2) mit dem Ventilauslauf (4) verbunden ist, wobei die Auslaufleitung (10.2) außen um das Schließelement (3) herum und durch den Ventileinlaufbereich (5.1) geführt ist.

## Claims

1. Valve, in particular servo valve, having a valve seat (2) which is arranged between a valve inlet (5) and a valve outlet (4), and having a closure element (3) which is arranged so as to be movable with respect to the valve seat (2) and which has a diaphragm (7), a support element (8) for supporting the diaphragm (7) and a pressure relief device (6) for reducing pressure peaks in the valve inlet (5), wherein the pressure relief device (6) has a relief duct (6.1) which is formed so as to be closable via a sealing element (6.2) which is in the form of a ball, wherein the ball is connected to a spring element (9) in the form of a compression spring and is pressed by the latter against a sealing seat (8.1), wherein the valve inlet (5) has a valve inlet region (5.1) arranged in front of the diaphragm (7) in the inflow direction and has a pressure space (5.2) arranged behind the diaphragm (7) in the outflow direction, wherein the pressure space (5.2) is connected to a pilot control valve (10) and the pilot control valve (10) is connected to the valve outlet (4),
**characterized**
**in that** the ball is in the form of a rubber ball, and in that the pilot control valve (10) is connected via a pressure line (10.1) to the pressure space (5.2) and via an outlet line (10.2) to the valve outlet (4), wherein the outlet line (10.2) is led around the closure element (3) on the outside and through the valve inlet region (5.1).

2. Valve according to Claim 1, **characterized in that** the pressure relief device (6) is in the form of an overpressure valve.

3. Valve according to either of the preceding claims, **characterized in that** a pressure element (6.3) is arranged in the relief duct (6.1).

4. Valve according to Claim 3, **characterized in that** the sealing element (6.2) is arranged on the pressure element (6.3).

5. Valve according to one of the preceding claims, **characterized in that** the pressure relief device (6) is preloaded in the direction of its closed position by a spring element (9).

6. Valve according to one of the preceding claims, **characterized in that** the pressure relief device (6) extends through the support element (8).

7. Valve according to one of the preceding claims, **characterized in that** the pressure relief device (6) is arranged concentrically with respect to the diaphragm (7).

8. Valve according to one of the preceding claims, **characterized in that** the diaphragm (7) has a clamping region (7.1) for connection, or for clamping, to a wall of the valve (1), a closure region (7.3) for closing the valve (1), and a rolling region (7.2) for movement of the closure region (7.3) with respect to the valve seat (2).

9. Valve according to one of the preceding claims, **characterized in that** the pilot control valve (10) is arranged such that, in the case of the pilot control valve (10) being opened, the pressure in the pressure space (5.2) drops, and the closure element (3) automatically lifts off from the valve seat (2).

10. Method for reducing pressure peaks in a valve inlet (5) of a valve (1), in particular a servo valve, having a valve seat (2) which is arranged between the valve inlet (5) and a valve outlet (4), and having a closure element (3) which is arranged so as to be movable with respect to the valve seat (2) and which has a diaphragm (7), a support element (8) for supporting the diaphragm (7) and a pressure relief device, wherein, in the case of a pressure peak in the valve inlet (5), the pressure relief device (6) automatically opens, wherein the pressure relief device (6) has a relief duct (6.1) which is formed so as to be closable via a sealing element (6.2) which is in the form of a ball, wherein the ball is connected to a spring element (9) in the form of a compression spring and is pressed by the latter against a sealing seat (8.1), wherein the valve inlet (5) has a valve inlet region (5.1) arranged in front of the diaphragm (7) in the inflow direction and has a pressure space (5.2) arranged behind the diaphragm (7) in the outflow direction, wherein the pressure space (5.2) is connected to a pilot control valve (10) and the pilot control valve (10) is connected to the valve outlet (4),
**characterized**
**in that** a rubber ball is used as the ball, and in that the pilot control valve (10) is connected via a pressure line (10.1) to the pressure space (5.2) and via an outlet line (10.2) to the valve outlet (4), wherein the outlet line (10.2) is led around the closure element (3) on the outside and through the valve inlet region (5.1).

## Revendications

1. Soupape, en particulier servosoupape , comprenant un siège de soupape (2) disposé entre une entrée de soupape (5) et une sortie de soupape (4) et un élément de fermeture (3) disposé de manière mobile par rapport au siège de soupape (2), lequel élément de fermeture (3) comprend une membrane (7), un élément de support (8) pour supporter la membrane (7) et un dispositif de détente (6) pour la réduction de pointes de pression dans l'entrée de soupape (5), le dispositif de détente (6) comprenant un canal de détente (6.1) qui est réalisé de manière à pouvoir être fermé par le biais d'un élément d'étanchéité (6.2) configuré en tant que bille, la bille étant reliée à un élément ressort (9) configuré en tant que ressort de compression et étant pressée par celui-ci contre un siège d'étanchéité (8.1), l'entrée de soupape (5) comprenant une région d'entrée de soupape (5.1) disposée devant la membrane (7) dans le sens d'alimentation et une chambre de pression (5.2) disposée derrière la membrane (7) dans le sens d'évacuation, la chambre de pression (5.2) étant reliée à une soupape pilote (10) et la soupape pilote (10) étant reliée à la sortie de soupape (4), **caractérisée en ce que**
la bille est configurée en tant que bille en caoutchouc, et **en ce que** la soupape pilote (10) est reliée à la chambre de pression (5.2) par le biais d'une conduite de pression (10.1) et à la sortie de soupape (4) par le biais d'une conduite de sortie (10.2), la conduite de sortie (10.2) étant guidée extérieurement autour de l'élément de fermeture (3) et à travers la région d'entrée de soupape (5.1).

2. Soupape selon la revendication 1, **caractérisée en ce que** le dispositif de détente (6) est configuré en tant que soupape de surpression.

3. Soupape selon l'une des revendications précédentes, **caractérisée en ce qu'**un élément de pression (6.3) est disposé dans le canal de détente (6.1).

4. Soupape selon la revendication 3, **caractérisée en ce que** l'élément d'étanchéité (6.2) est disposé sur l'élément de pression (6.3).

5. Soupape selon l'une des revendications précédentes, **caractérisée en ce que** le dispositif de détente (6) est précontraint par un élément ressort (9) en direction de sa position fermée.

6. Soupape selon l'une des revendications précédentes, **caractérisée en ce que** le dispositif de détente (6) s'étend à travers l'élément de support (8).

7. Soupape selon l'une des revendications précédentes, **caractérisée en ce que** le dispositif de détente (6) est disposé concentriquement à la membrane (7).

8. Soupape selon l'une des revendications précédentes, **caractérisée en ce que** la membrane (7) comprend une région de serrage (7.1) pour la liaison à une paroi de la soupape (1) ou pour le serrage dans cette paroi, une région de fermeture (7.3) pour la fermeture de la soupape (1), et une région de roulement (7.2) pour le déplacement de la région de fermeture (7.3) par rapport au siège de soupape (2).

9. Soupape selon l'une des revendications précédentes, **caractérisée en ce que** la soupape pilote (10) est disposée de telle sorte que la pression dans la chambre de pression (5.2) chute lors de l'ouverture de la soupape pilote (10), et **en ce que** l'élément de fermeture (3) se soulève automatiquement du siège de soupape (2).

10. Procédé de réduction de pointes de pression dans une entrée de soupape (5) d'une soupape (1), en particulier d'une servosoupape, comprenant un siège de soupape (2) disposé entre l'entrée de soupape (5) et une sortie de soupape (4) et un élément de fermeture (3) disposé de manière mobile par rapport au siège de soupape (2), lequel élément de fermeture (3) comprend une membrane (7), un élément de support (8) pour supporter la membrane (7) et un dispositif de détente, le dispositif de détente (6) s'ouvrant automatiquement en cas de pointe de pression dans l'entrée de soupape (5), le dispositif de détente (6) comprenant un canal de détente (6.1) qui est réalisé de manière à pouvoir être fermé par le biais d'un élément d'étanchéité (6.2) configuré en tant que bille, la bille étant reliée à un élément ressort (9) configuré en tant que ressort de compression et étant pressée par celui-ci contre un siège d'étanchéité (8.1), l'entrée de soupape (5) comprenant une région d'entrée de soupape (5.1) disposée devant la membrane (7) dans le sens d'alimentation et une chambre de pression (5.2) disposée derrière la membrane (7) dans le sens d'évacuation, la chambre de pression (5.2) étant reliée à une soupape pilote (10) et la soupape pilote (10) étant reliée à la sortie de soupape (4),
**caractérisé en ce**
**qu'**une bille en caoutchouc est utilisée en tant que bille, et **en ce que** la soupape pilote (10) est reliée à la chambre de pression (5.2) par le biais d'une conduite de pression (10.1) et à la sortie de soupape (4) par le biais d'une conduite de sortie (10.2), la conduite de sortie (10.2) étant guidée extérieurement autour de l'élément de fermeture (3) et à travers la région d'entrée de soupape (5.1).
